# EUROPÄISCHE PATENTANMELDUNG

(11) **EP 2 369 287 A2**
(43) Veröffentlichungstag der Anmeldung: **28.09.2011**
(21) Anmeldenummer: 11157414.1
(22) Anmeldetag: 09.03.2011
(51) Int. Cl.: F28D 9/00, F28F 9/26

(54) **Wärmetauscher**

(30) Priorität: 16.03.2010 DE 202010003704 U
(71) Anmelder: RWG Ruhr-Wasserwirtschafts-Gesellschaft mbH, 45128 Essen (DE); Schrowange, Stefan, 59929 Brilon (DE)
(72) Erfinder: Schrowange, Stefan, 59929 Brilon (DE)
(74) Vertreter: von dem Borne, Andreas

(57) **Zusammenfassung**

Es handelt sich um einen Wärmetauscher zur Wärmeübertragung von einem ersten fließfähigen Medium (a), z. B. (aufgeheiztem) Faulschlamm oder Wasser, an ein zweites fließfähiges Medium (b), z. B. (kaltem) Rohschlamm, mit zumindest einem Wärmetauschermodul (M), welches ein erstes Rohrleitungsbündel mit mehreren Rohrsträngen (1a) für das erste Medium (a) und ein zweites Rohrleitungsbündel mit mehreren Rohrsträngen (1 b) für das zweite Medium (b) aufweist, wobei die Rohrstränge (1a) des ersten Rohrleitungsbündels an einem Kopfende (4) in eine gemeinsame erste Zulauf-Sammelkammer (2a) und an ihrem gegenüberliegenden Kopfende (4) in eine gemeinsame erste Ablauf-Sammelkammer (3a) münden und wobei die Rohrstränge (1 b) des zweiten Rohrleitungsbündels an einem Kopfende (4) in eine zweite Zulauf-Sammelkammer (2b) oder Ablauf-Sammelkammer und an ihrem gegenüberliegenden Kopfende in eine zweite Ablauf-Sammelkammer (3b) oder Zulauf-Sammelkammer münden, wobei an jedem Kopfende des Wärmetauschermoduls (M) jeweils eine Sammelkammer für das erste Medium (a) und eine Sammelkammer für das zweite Medium (b) angeordnet sind. Dieser Wärmetauscher ist dadurch gekennzeichnet, dass die Rohrstränge (1a, 1 b) von mehreren sich in Modullängsrichtung erstreckenden Blechen (5, 6, 7, 8) gebildet werden, von denen zumindest einige entlang ihrer Längskanten abgewinkelte Stege (10, 12) aufweisen, wobei die Stege (10, 12) eines Blechs mit dem jeweils benachbarten Blech unter Bildung des jeweiligen Rohrstrangs verbunden sind.

## Beschreibung

Die Erfindung betrifft einen Wärmetauscher zur Wärmeübertragung von einem ersten fließfähigen Medium an ein zweites fließfähiges Medium,

mit zumindest einem Wärmetauschermodul (in Horizontalbauweise), welches ein erstes Rohrleitungsbündel mit mehreren Rohrsträngen für das erste Medium und ein zweites Rohrleitungsbündel mit mehreren Rohrsträngen für das zweite Medium aufweist,

wobei die Rohrstränge des ersten Rohrleitungsbündels an einem Kopfende in eine gemeinsame erste Zulauf-Sammelkammer und an ihrem gegenüberliegenden Kopfende in eine gemeinsame erste Ablauf-Sammelkammer münden und

wobei die Rohrstränge des zweiten Rohrleitungsbündels an einem Kopfende in eine zweite Zulauf-Sammelkammer oder Ablauf-Sammelkammer und an ihrem gegenüberliegenden Kopfende in eine zweite Ablauf-Sammelkammer oder Zulauf-Sammelkammer münden,

wobei an jedem Kopfende des Wärmetauschermoduls jeweils eine Sammelkammer für das erste Medium und eine Sammelkammer für das zweite Medium angeordnet sind.

Ein solcher Wärmetauscher, der insbesondere als Gegenstromwärmetauscher ausgebildet ist, wird auch als Rekuperator bezeichnet. Die Temperatur des ersten Mediums ist höher als die Temperatur des zweiten Mediums, wobei im Zuge der Wärmeübertragung dem ersten Medium Wärme entzogen und dem zweiten Medium zugeführt wird, so dass sich dessen Temperatur erhöht. Bei dem ersten Medium kann es sich im Rahmen der Erfindung z. B. um aufgeheizten Faulschlamm (oder auch um Warmwasser) handeln, während das zweite Medium, nämlich das zu erwärmende Medium vorzugsweise kalter Rohschlamm ist. Die Erfindung betrifft folglich vorzugsweise einen Wärmetauscher für Abwasseraufbereitungsanlagen bzw. Kläranlagen, z. B. zur Wärmerückgewinnung aus aufgeheiztem Faulschlamm. In einer Kläranlage wird in der Praxis Rohschlamm mit einer Temperatur von beispielsweise 7 °C bis 15 °C einem Faulbehälter zugeführt. In dem Faulbehälter verweilt der Rohschlamm in der Regel einige Wochen, wobei zur Methangaserzeugung üblicherweise Wärme zugeführt wird. Der Trockensubstanzanteil in einem solchen Rohschlamm beträgt in etwa 3 %. Aus dem Faulbehälter wird dann der aus dem Rohschlamm entstandene Faulschlamm abgeführt, welcher eine deutlich höhere Temperatur als der Rohschlamm aufweist, z. B. eine Temperatur von 35 °C bis 38 °C. Für die Weiterverarbeitung dieses Faulschlamms ist es nun zweckmäßig, den Faulschlamm abzukühlen, da sich beispielsweise ein Entwässerungsvorgang bei niedrigeren Temperaturen effektiver durchführen lässt. Aus diesem Grunde ist es bekannt, einen Wärmetauscher der eingangs beschriebenen Art einzusetzen, um die im Zuge des Abkühlens des Faulschlamms freiwerdende Wärme dem kalten Rohschlamm gleichsam zur Vorwärmung zuzuführen. Alternativ lässt sich die Erfindung aber auch im Bereich der Biogaserzeugung einsetzen und folglich in Biogasanlagen integrieren.

Ein Wärmetauscher der eingangs beschriebenen Art ist insbesondere aus der DE 20 2009 005 732 U1 bekannt. Dieser zeichnet sich insbesondere dadurch aus, dass die Rohrstränge des ersten und des zweiten Rohrleitungsbündels innerhalb eines Moduls im Wesentlichen parallel zueinander und im Wesentlichen geradlinig ohne bogenförmige Umkehrstrecken bzw. Umlenkstrecken verlaufen. Auf ein Hin- und Herführen eines Mediums innerhalb eines Moduls über Umlenkstrecken wird folglich verzichtet, da sämtliche Rohrstränge eines Rohrleitungsbündels innerhalb eines Moduls beidseitig jeweils in Sammelkammern münden. An den Kopfenden des Wärmetauschers bzw. eines Wärmetauschermoduls sind folglich jeweils zwei Sammelkammern, nämlich einerseits für das erste Medium und andererseits für das zweite Medium angeordnet. So tritt das eine Medium in die entsprechende Zulauf-Sammelkammer ein und wird dort auf die jeweiligen Rohrstränge verteilt. Das Medium durchläuft dann in einer konstanten und einheitlichen Richtung diese parallelen Rohrstränge und tritt am anderen Ende des Moduls aus den Rohrsträngen aus und wiederum in eine gemeinsame Ablauf-Sammelkammer ein. In diesen Sammelkammern erfolgt folglich ein zusätzlicher interner Wärmeausgleich des jeweiligen Mediums bzw. der jeweiligen Schlammsorte. Dieses ist insbesondere dann von besonderer Bedeutung, wenn mehrere derartige Wärmetauschermodule hintereinander geschaltet werden. Das bekannte Wärmetauschermodul kann kastenförmige Rohrstränge mit im Wesentlichen quadratischem oder rechteckigem Querschnitt aufweisen, wobei die Rohrwände die Wärmetauscherflächen bilden, wobei jeweils paarweise benachbarte Rohrstränge von einerseits dem ersten Medium und andererseits dem zweiten Medium durchströmt werden. Um zu gewährleisten, dass das jeweilige Medium bei der bekannten Ausführungsform ausschließlich in die jeweils zugeordnete Sammelkammer gelangt, sind in die Rohrstränge Verschlussstücke, vorzugsweise Leitstücke mit schräg verlaufenden Leitflächen eingesetzt, welche den Zugang von dem jeweiligen Rohrstrang zu einer Sammelkammer blockieren und den Zugang zu der benachbarten Sammelkammer freigeben. Dabei handelt es sich um dreieckförmige bzw. keilförmige Leitstücke, die als plattenförmige Endstücke ausgebildet sind, deren Dicke zugleich den Abstand zwischen den benachbart angeordneten Kastenprofilen bestimmt. Dieser aus der DE 20 2009 005 732 U1 bekannte Wärmetauscher hat sich bewährt. Er ist jedoch in konstruktiver Hinsicht weiterentwicklungsfähig.

Ferner kennt man aus der DE 43 33 904 C2 einen Wärmetauscher mit parallelen Strömungskanälen, der im Querschnitt aus schichtenweise aufeinanderliegenden Tafeln mit mäanderförmigem Profil ausgebildet ist, wobei eine aufliegende Tafel die Strömungskanäle der darunter liegenden Tafel abdeckt und wobei jeweils seitlich benachbarte Strömungskanäle von unterschiedlichen Fluiden durchströmbar sind. Dieser Aufbau aus mäanderförmigen Tafeln soll es ermöglichen, dass die Tafeln ohne Verklebung, Verschweißung oder Verlötung aufeinander gelegt und dann miteinander verspannt werden können.

Der Erfindung liegt die Aufgabe zugrunde, einen Wärmetauscher der eingangs beschriebenen Art zu schaffen, welcher sich durch einen vereinfachten Aufbau und insbesondere geringere Fertigungskosten auszeichnet.

Zur Lösung dieser Aufgabe lehrt die Erfindung bei einem gattungsgemäßen Wärmetauscher der eingangs beschriebenen Art, dass die Rohrstränge von mehreren sich in Modullängsrichtung erstreckenden Blechen gebildet werden, von denen zumindest einige entlang ihrer Längskanten abgewinkelte Stege aufweisen, wobei die Stege eines Blechs mit dem jeweils benachbarten Blech unter Bildung des jeweiligen Rohrstranges verbunden sind. Bevorzugt sind zumindest einige dieser Bleche als Trennbleche zwischen zwei benachbarten Rohrsträngen bzw. Kanälen ausgebildet, wobei diese Trennbleche zumindest bereichsweise einen U-förmigen Querschnitt aufweisen, wobei die U-Basis zwei benachbarte Rohrstränge bzw. Kanäle voneinander trennt und die U-Schenkel die abgewinkelten Stege bilden. Solche Trennbleche, z. B. Trennbleche mit einem U-förmigen Querschnitt lassen sich sehr einfach jeweils einstückig aus Flachblechen fertigen, welche dann unter Bildung der U-Profilform und unter Bildung der Stege abgekantet oder abgebogen werden.

Die Erfindung geht dabei von der Erkenntnis aus, dass sich der Aufbau und insbesondere die Fertigung eines Wärmetauschermoduls erheblich vereinfachen lässt, wenn nicht länger mit kastenförmigen Profilen gearbeitet wird, sondern wenn das Modul aus entsprechend abgewinkelten Blechen und vorzugsweise U-förmig geformten Blechen zusammengesetzt wird. Diese einzelnen U-förmigen Bleche bzw. Trennbleche werden miteinander flüssigkeitsdicht verbunden, vorzugsweise verschweißt. Die U-Stege eines Trennblechs werden folglich rückseitig mit der U-Basis eines benachbarten Blechs, z. B. Trennblechs verbunden, vorzugsweise verschweißt. Auf diese Weise wird mit geringem Materialaufwand und geringem Fertigungsaufwand ein Wärmetauschermodul geschaffen, bei welchem in an sich bekannter Weise die Rohrstränge des ersten Rohrleitungsbündels an einem Ende in eine Sammelkammer münden und an dem gegenüberliegenden Ende in eine andere Sammelkammer münden, wobei auch hier an jedem Kopfende des Wärmetauschermoduls jeweils eine Sammelkammer für das erste Medium und eine Sammelkammer für das zweite Medium angeordnet sind. Die beim Stand der Technik gemäß DE 20 2009 005 732 U1 erreichten Vorteile lassen sich folglich bei dem erfindungsgemäßen Wärmetauschermodul in gleicher Weise erreichen, jedoch bei vereinfachtem Fertigungsaufwand und damit geringeren Herstellungskosten.

In besonders bevorzugter Weiterbildung der Erfindung lässt sich das Wärmetauschermodul aus lediglich wenigen, verschiedenen Trennblechen unterschiedlichen Typs zusammensetzen. So werden vorzugsweise zwei verschiedene Trennblech-Typen verwendet, die abwechselnd nebeneinander angeordnet werden. Ergänzend kann es zweckmäßig sein, zusätzlich zu den Trennblechen der beiden Blechtypen zwei seitliche Abschlussbleche vorzusehen, wobei auch hier zwei unterschiedliche Abschlussblech-Typen vorgesehen sein können. Ein Abschlussblech kann dabei vorzugsweise als einfaches Flachblech ohne Abkantungen oder Abwinklungen ausgebildet sein. Das andere Abschlussblech weist vorzugsweise einen U-förmigen Querschnitt mit U-Basis und U-Schenkeln auf, wobei die U-Schenkel dieses Abschlussblechs mit der U-Basis eines benachbarten Trennblechs verbunden, z. B. verschweißt werden.

Nach einer ersten Ausführungsform der Erfindung sind die U-förmigen Trennbleche (im Querschnitt) in derselben Richtung orientiert. Das heißt, alle U-Schenkel weisen in dieselbe Richtung. Bei dieser Ausführungsform ist in der Regel ein einfaches Flachblech als Abschlussblech zweckmäßig.

Alternativ kann in einer zweiten Ausführungsform ein zentrales Mittelblech vorgesehen sein, welches als Flachblech ausgebildet ist, wobei auf beiden Seiten dieses Mittelblechs jeweils Trennbleche in unterschiedlichen Richtungen orientiert angeordnet sind, so dass die dem Mittelblech unmittelbar benachbarten Trennbleche jeweils mit ihren U-Schenkeln mit dem Mittelblech verbunden, z. B. verschweißt sind. Bei dieser Ausführungsform sind die U-Schenkel sämtlicher Trennbleche jeweils auf das zentrale Zwischenblech hin ausgerichtet. Bei dieser Ausführungsform kann dann insbesondere auf seitliche Abschlussbleche in Form von Flachblechen verzichtet werden. Vielmehr sind auch die seitlichen Abschlussbleche zumindest bereichsweise U-förmig ausgebildet.

Die vorteilhafte Ausgestaltung des Moduls aus Trennblechen und Abschlussblechen unterschiedlichen Typs hängt insbesondere damit zusammen, dass die von den Blechen gebildeten Rohrstränge endseitig und folglich im Bereich der Kopfenden in die dort angeordneten Sammelkammern münden. Wie beim Stand der Technik sind an jedem Kopfende des Wärmetauschermoduls jeweils eine Sammelkammer für das erste Medium und eine Sammelkammer für das zweite Medium angeordnet. Im Falle eines Gegenstromwärmetauschers sind an einem Kopfende des Wärmetauschers einerseits die erste Zulauf-Sammelkammer und andererseits die zweite Ablauf-Sammelkammer unmittelbar benachbart zueinander angeordnet. An dem gegenüberliegenden Kopfende des Wärmetauschermoduls sind einerseits die zweite Zulauf-Sammelkammer und andererseits die erste Ablauf-Sammelkammer unmittelbar benachbart zueinander angeordnet. Wird im Gleichstrombetrieb gearbeitet, so sind an einem Kopfende zwei Zulauf-Sammelkammern und an dem anderen Kopfende zwei Ablauf-Sammelkammern angeordnet. Vorzugsweise ist der erfindungsgemäße Wärmetauscher als Gegenstromwärmetauscher ausgebildet. Die Erfindung umfasst jedoch auch Gleichstrom-Varianten.

Vorzugsweise sind die an einem Kopfende angeordneten Sammelkammern (im Betrieb) übereinander angeordnet. Da sich die jeweiligen Rohrstränge, welche von den nebeneinander angeordneten Blechen gebildet werden, vorzugsweise über die gesamte Höhe des Wärmetauschermoduls erstrecken und folglich auch über die gesamte Höhe der Kopfenden (einschließlich der beiden Sammelkammern) erstrecken, muss dafür gesorgt werden, dass die jeweiligen Rohrstränge jeweils nur in die zugeordnete Sammelkammer münden, die sich eben nicht über die gesamte Höhe des Kopfendes erstreckt. Dieses wird erfindungsgemäß dadurch realisiert, dass die Trennbleche nicht als in der Draufsicht rechteckige Trennbleche ausgebildet sind, sondern dass die Trennbleche einen die Rohrstränge voneinander trennenden Mittelabschnitt aufweisen und dass sich endseitig an diesen Mittelabschnitt beidseitig jeweils ein die Mündung in die Sammelkammer bildender Endabschnitt anschließt.

Die Mittelabschnitte weisen eine die Höhe des Rohrstrangs definierende und über die gesamte Länge des Mittelabschnitts konstante Höhe auf. Sie sind in der Draufsicht vorzugsweise rechteckförmig ausgebildet. Die Endabschnitte weisen jedoch eine sich zum Blechende hin verjüngende Höhe auf, sie verjüngen sich folglich zum Blechende hin und sind in der Draufsicht vorzugsweise dreieckförmig ausgebildet. Dazu ist es zweckmäßig, wenn die Trennbleche auch im Bereich der Endabschnitte jeweils zumindest einen, vorzugsweise lediglich einen, abgewinkelten Steg aufweisen, welcher mit dem Endabschnitt eines benachbarten Trennbleches verbunden, z. B. verschweißt ist.

Durch eine solche Konstruktion lassen sich die abgewinkelten bzw. abgekanteten Trennbleche (vorzugsweise zwei verschiedene Trennblech-Typen abwechselnd) nebeneinander anordnen und miteinander verschweißen, so dass nicht nur die nebeneinander angeordneten Rohrstränge gebildet werden, welche sich vorzugsweise über die gesamte Höhe des Moduls erstrecken, sondern im Zuge des Zusammensetzens entstehen dann auch die (schräg nach oben oder unten ausgerichteten) Mündungen der Rohrstränge in die jeweilige Sammelkammer, wobei gewährleistet ist, dass sämtliche Rohrstränge des ersten Rohrleitungsbündels in eine Sammelkammer, z. B. die obere Sammelkammer, und sämtliche Rohrstränge des anderen Rohrleitungsbündels in die andere Sammelkammer, z. B. die untere Sammelkammer münden.

Bei dieser bevorzugten Ausführungsform entsteht folglich im Bereich der Endabschnitte der Trennbleche (im Querschnitt) eine "zickzackförmige Trennwand" zwischen der oberen Sammelkammer und der unteren Sammelkammer.

Das Wärmetauschermodul hat vorzugsweise insgesamt einen quadratischen oder rechteckförmigen Querschnitt. Auch die Kopfenden weisen vorzugsweise einen rechteckförmigen oder quadratischen Querschnitt auf. Besonders bevorzugt entspricht der Querschnitt des Wärmetauschermoduls im Bereich der Kopfenden in etwa dem Querschnitt des Wärmetauschermoduls im Bereich der einzelnen Rohrstränge, so dass das Wärmetauschermodul insgesamt kastenförmig ausgebildet ist. An den Kopfenden sind jeweils zwei Öffnungen, nämlich Ablauföffnungen bzw. Zulauföffnungen vorgesehen. Über diese Öffnungen kann das jeweilige Medium der Zulaufkammer zugeführt bzw. aus der Ablaufkammer abgeführt werden. Besonders bevorzugt weist die obere Sammelkammer eine obere Öffnung und die untere Sammelkammer eine untere Öffnung auf.

Von besonderer Bedeutung ist dabei die Tatsache, dass sich das beschriebene Wärmetauschermodul hervorragend mit weiteren Wärmetauschermodulen kombinieren lässt, so dass die Erfindung in besonders bevorzugter Ausführungsform einen Wärmetauscher vorschlägt, welcher sich durch mehrere in Reihe hintereinandergeschaltete Wärmetauschermodule der beschriebenen Art auszeichnet, wobei diese Wärmetauschermodule nacheinander von den Medien im Gegenstrom (oder auch im Gleichstrom) durchströmt werden. Durch die beschriebene erfindungsgemäße Bauweise ist es nun nicht erforderlich, einzelne Rohrstränge eines Moduls mit korrespondierenden Rohrsträngen eines anderen Moduls zu verbinden, sondern die Erfindung schlägt vor, dass die Ablauf-Sammelkammer eines Moduls über die Ablauföffnung mit einer Zulauf-Sammelkammer des jeweils nachgeordneten Moduls, nämlich mit dessen Zulauf-Öffnung verbunden ist. Die Verbindung kann über geeignete Verbindungsleitungen erfolgen. Es besteht aber auch die Möglichkeit, einzelne Wärmetauschermodule unmittelbar miteinander zu verbinden, z. B. aufeinanderzustapeln und dann beispielsweise auch mehrere Stapel nebeneinander anzuordnen, wobei die einzelnen Stapel dann wiederum über Verbindungsleitungen miteinander verbunden werden. Beispielhaft wird dazu dann auf die Figurenbeschreibung verwiesen. Die Hintereinanderschaltung mehrerer Wärmetauschermodule in Reihe bedeutet folglich nicht, dass die Wärmetauschermodule zwingend räumlich hintereinander angeordnet sein müssen, sie können vorzugsweise auch nebeneinander und/oder übereinander bzw. untereinander angeordnet sein, so dass ein kompakter Aufbau entsteht.

Optional oder ergänzend besteht die Möglichkeit, mehrere Module oder auch mehrere in Reihe hintereinandergeschaltete Module (zusätzlich) in einem Parallelbetrieb zu schalten. Insbesondere können mehrere Modulreihen parallel nebeneinander geschaltet werden.

Bei dem ersten Medium handelt es sich vorzugsweise um aufgeheizten Faulschlamm und bei dem zweiten Medium vorzugsweise um kalten Rohschlamm. Der Wärmetauscher lässt sich jedoch auch für andere fließfähige Medien einsetzen. So kann es sich bei dem ersten Medium auch um warmes Wasser handeln. Folglich kann der kalte Rohschlamm auch mit Warmwasser aufgeheizt bzw. vorgeheizt werden. Auch dieses kann im Bereich von Kläranlagen zweckmäßig sein, z. B. wenn mit der Verbrennung von Methangas Wasser für einen Heizkreislauf erwärmt wird, so kann der Wärmetauscher in diesen Heizkreislauf integriert werden, so dass mit Hilfe des Warmwassers dann z. B. Rohschlamm erwärmt werden kann.

Optional lässt sich der erfindungsgemäße Wärmetauscher jedoch auch in anderen technischen Branchen, z. B. in der Lebensmittelindustrie oder bei der Biogaserzeugung einsetzen.

Vorzugsweise weisen die Module eine Gesamtlänge von mehr als 1 m, z. B. mehr als 1,5 m auf. Höhe und/oder Breite eines Moduls können mehr als 20 cm betragen. So kann die Höhe z. B. mehr als 20 cm und die Breite z. B. mehr als 30 cm betragen. Es können z. B. 5 bis 10 Kanäle nebeneinander angeordnet sein, die z. B. jeweils eine Höhe von 15 bis 25 cm und eine Breite von 3 bis 5 cm aufweisen können.

Im Folgenden wird die Erfindung anhand einer lediglich ein Ausführungsbeispiel darstellenden Zeichnung näher erläutert. Es zeigen
- Fig. 1: einen erfindungsgemäßen Wärmetauscher bzw. ein Wärmetauschermodul in einer perspektivischen Ansicht,
- Fig. 2: den Gegenstand nach Fig. 1 in einer Draufsicht,
- Fig. 3: den Gegenstand nach Fig. 1 in einer Seitenansicht,
- Fig. 4: einen vereinfachten Schnitt A-A durch den Gegenstand nach Fig. 2,
- Fig. 5: ein erstes Trennblech für das Wärmetauschermodul nach Fig. 1,
- Fig. 6: ein zweites Trennblech für ein Wärmetauschermodul nach Fig. 1,
- Fig. 7: ein erstes Abschlussblech für ein Wärmetauschermodul nach Fig. 1,
- Fig. 8: ein zweites Abschlussblech für den Wärmetauscher nach Fig. 1,
- Fig. 9: einen erfindungsgemäßen Wärmetauscher mit mehreren hintereinander geschalteten Wärmetauschermodulen gemäß Fig. 1,
- Fig. 10: den Gegenstand nach Fig. 9 in einer schematischen Seitenansicht.
- Fig. 11: eine abgewandelte Ausführungsform des Gegenstandes nach Fig. 1,
- Fig. 12: einen vereinfachten Schnitt durch den Gegenstand nach Fig. 11.

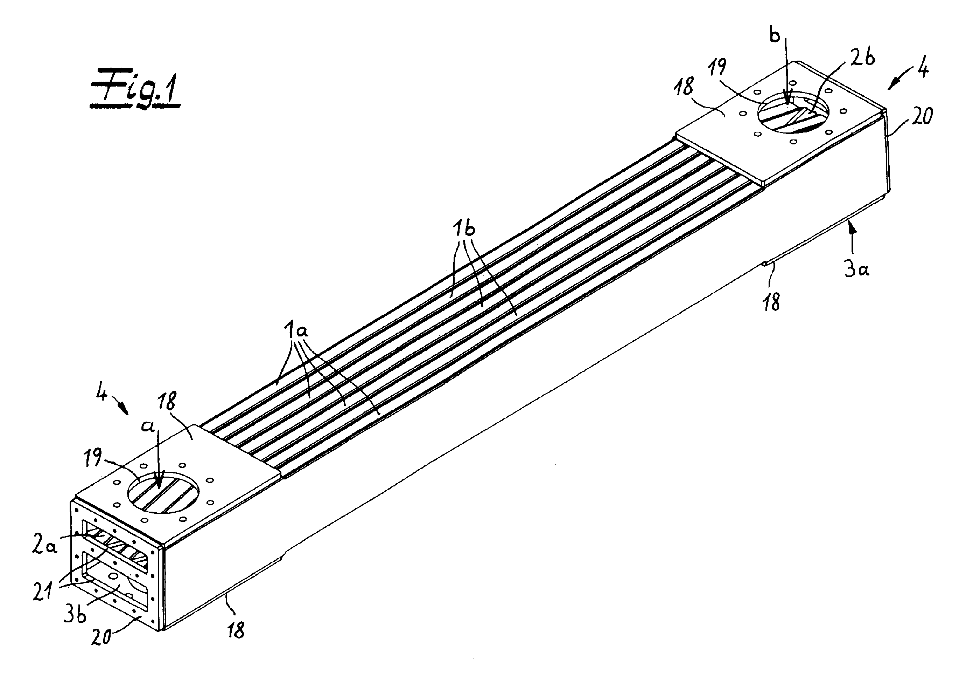

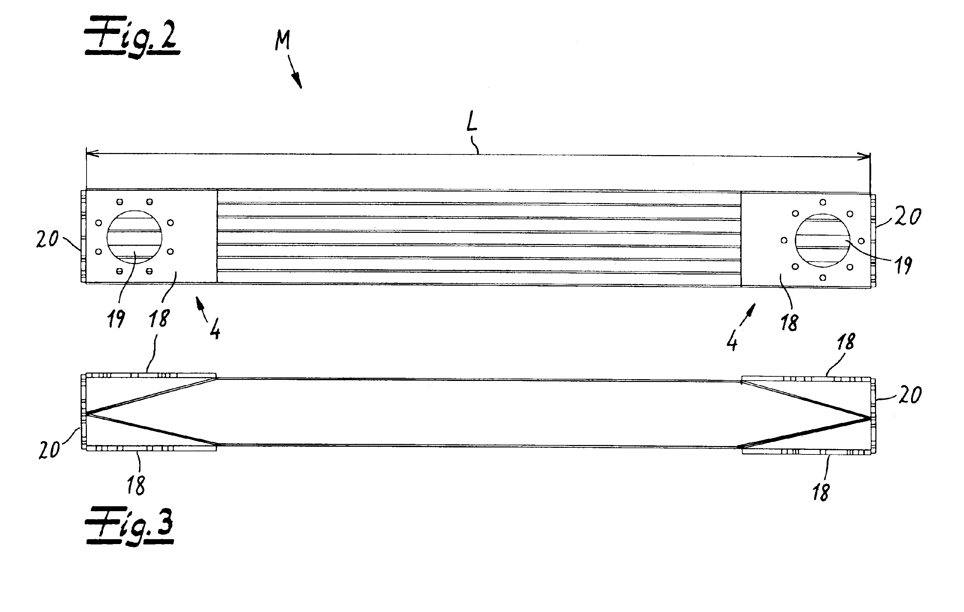

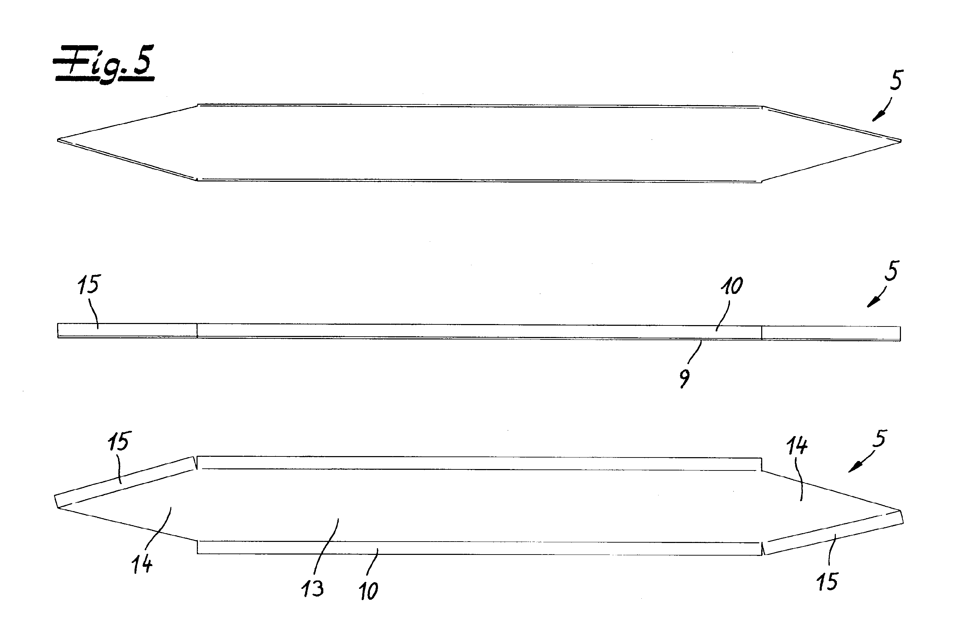

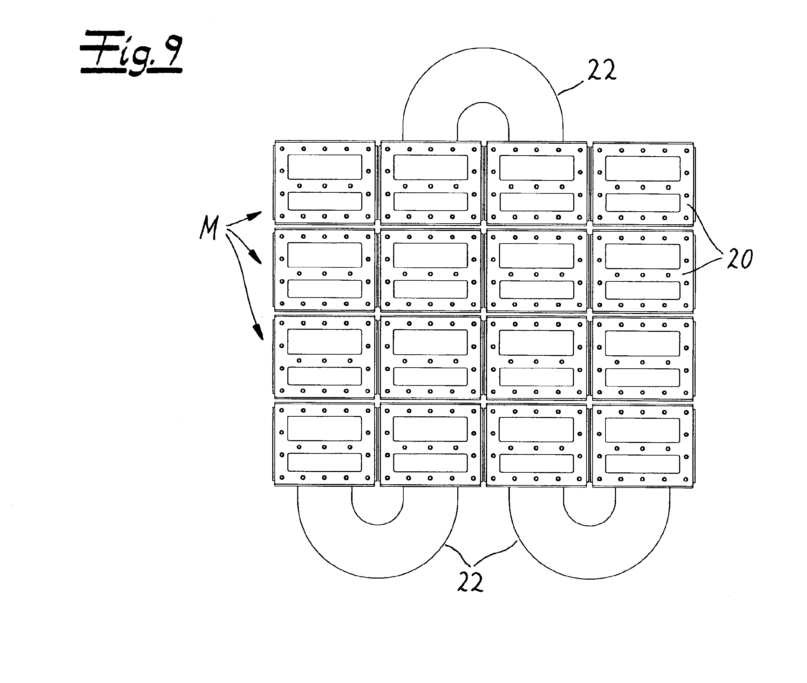

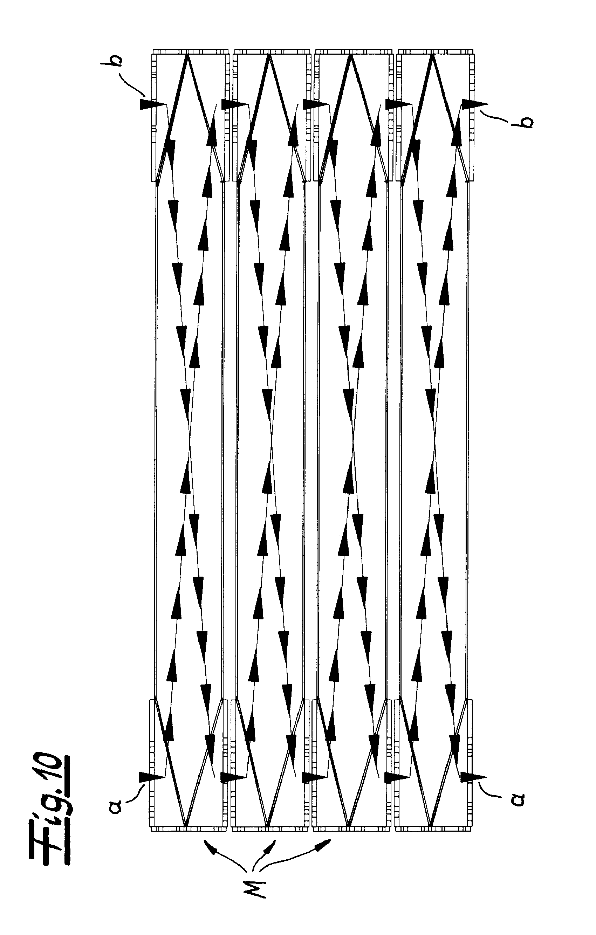

In den Figuren ist ein Wärmetauscher zur Wärmeübertragung von einem ersten Medium a, z. B. aufgeheiztem Faulschlamm oder auch Warmwasser, an ein zweites Medium b, z. B. kaltem Rohschlamm, dargestellt. Im Ausführungsbeispiel weist ein solcher Wärmetauscher mehrere Wärmetauschermodule M auf (vgl. Fig. 9 und 10). Der grundsätzliche Aufbau eines Wärmetauschermoduls M in Horizontalbauweise ist insbesondere in den Fig. 1 bis 4 sowie ergänzend den Fig. 5 bis 8 dargestellt. Horizontalbauweise meint, dass sich die Rohrstränge eines Moduls im Betrieb in (etwa) horizontaler Richtung erstrecken.

Das Wärmetauschermodul M weist ein erstes Rohrleitungsbündel mit mehreren Rohrsträngen bzw. Kanälen 1a für das erste Medium a, z. B. den Faulschlamm sowie ein zweites Rohrleitungsbündel mit mehreren Rohrsträngen bzw. Kanälen 1b für das im Gegenstrom zu dem ersten Medium a geführte zweite Medium b, z. B. den Rohschlamm auf. Das Modul lässt sich jedoch auch ohne konstruktive Änderungen im Gleichstrombetrieb verwenden. Die Rohrstränge 1a, 1b des ersten und des zweiten Rohrbündels sind dabei innerhalb eines solchen Moduls M im Wesentlichen parallel zueinander und im Wesentlichen geradlinig ohne bogenförmige Umlenkstrecken angeordnet. Das erste Medium a durchläuft folglich das Wärmetauschermodul M in den im Wesentlichen parallel angeordneten Kanälen 1a in einer einheitlichen Richtung von einem Kopfende 4 zu dem anderen Kopfende 4 des Wärmetauschermoduls, während das andere Medium b durch die Kanäle 1b das Modul M in einheitlicher, entgegengesetzter Richtung von einem Kopfende 4 zum anderen Kopfende 4 durchläuft. Dabei sind im Bereich der Kopfenden 4 des Wärmetauschermoduls M jeweils zwei Sammelkammern 2a, 3a, 2b, 3b für den Zulauf und den Ablauf der Medien 1a und 1b vorgesehen. Dabei münden die Kanäle 1a des ersten Rohrleitungsbündels an einem Ende in eine gemeinsame Zulauf-Sammelkammer 2a und an ihrem gegenüberliegenden Ende in eine gemeinsame erste Ablauf-Sammelkammer 3a. Dementsprechend münden die Kanäle 1b des zweiten Rohrleitungsbündels an einem Ende in eine zweite Zulauf-Sammelkammer 2b und an ihrem gegenüberliegenden Ende in eine zweite Ablauf-Sammelkammer 3b. An jedem Kopfende sind folglich zwei Sammelkammern 2a, 3b bzw. 3a, 2b angeordnet, welche an jedem Kopfende 4 unmittelbar benachbart übereinander bzw. untereinander angeordnet sind. Die Rohrstränge bzw. Kanäle 1a, 1b sind als kastenförmige Kanäle mit im Wesentlichen rechteckigem Querschnitt ausgebildet, wobei die Kanalwände bzw. Trennwände zwischen den Kanälen die Wärmeübertragungsflächen bilden. Jeweils paarweise benachbarte Kanäle werden von einerseits dem ersten Medium a und andererseits dem zweiten Medium b durchströmt. Die Kanäle 1a, 1 b erstrecken sich dabei über die gesamte Höhe des Moduls M und folglich auch über die gesamte Höhe der Kopfenden 4. Folglich erstrecken sich die Kanäle 1a und 1b jeweils über die Höhe beider Sammelkammern eines Kopfendes. Um zu gewährleisten, dass die Medien a, b in der gewünschten Weise von einer Sammelkammer (z. B. 2b) an einem Kopfende 4 zu einer anderen Sammelkammer (z. B. 3b) am anderen Kopfende 4 transportiert werden, sind die Kanäle 1a, 1b in den Endbereichen im Bereich der Sammelkammern speziell ausgestaltet, so dass der Zugang von dem jeweiligen Rohrstrang zu der einen Sammelkammer blockiert und der Zugang zu der darunter bzw. darüber angeordneten anderen Sammelkammer frei ist.

Im Rahmen der Erfindung werden die Rohrstränge bzw. Kanäle 1a, 1b von mehreren, sich in Modullängsrichtung L erstreckenden Blechen 5, 6, 7, 8 gebildet. Erfindungsgemäß werden folglich nicht einzelne Kastenprofile als Rohre bzw. Kanäle verwendet, sondern die Kanäle 1a, 1b werden aus speziell geformten Blechen zusammengesetzt. Denn zumindest einige dieser Bleche weisen entlang ihrer Längskanten abgewinkelte Stege 10 auf, wobei die Stege 10 eines Blechs mit dem benachbarten Blech unter Bildung des jeweiligen Rohrstrangs verbunden sind.

Im Ausführungsbeispiel nach den Fig. 1 bis 10 setzt sich das Wärmetauschermodul aus mehreren verschiedenen Trennblechen 5, 6 unterschiedlichen Typs sowie mehreren Abschlussblechen 7, 8 unterschiedlichen Typs zusammen. Die Einzelbleche 5, 6, 7, 8 sind im Detail in den Fig. 5, 6, 7, 8 dargestellt. Jede dieser Fig. 5 bis 8 zeigt das jeweilige Blech einmal in einer Seitenansicht (oben) und einmal in einer Draufsicht (Mitte) sowie ergänzend zum besseren Verständnis das noch nicht gebogene Blech mit den angedeuteten Biegelinien (unten).

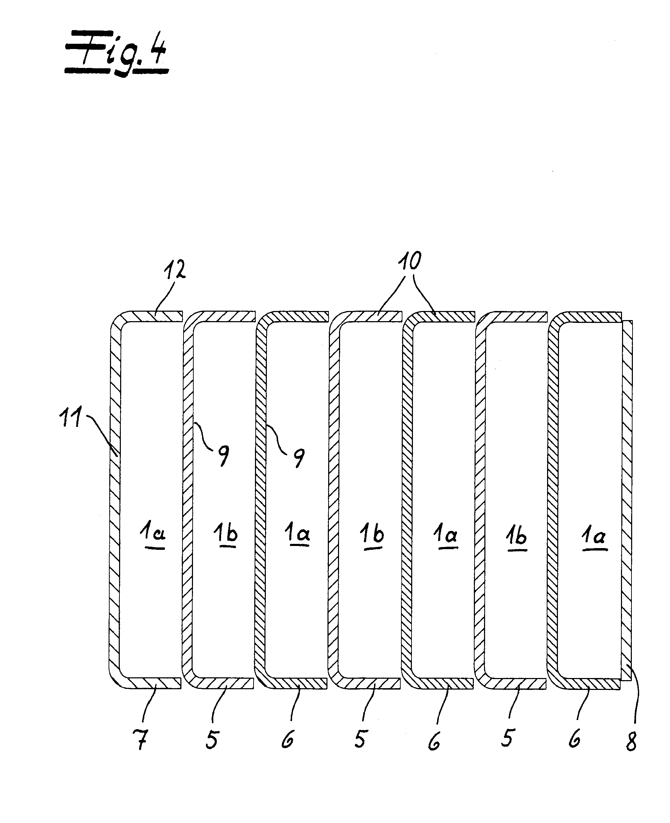

Fig. 4 zeigt dann, wie die einzelnen Bleche 5, 6, 7, 8 zu dem Wärmetauschermodul zusammengesetzt sind.

Es ist erkennbar, dass die Trennbleche 5, 6 zumindest bereichsweise einen U-förmigen Querschnitt aufweisen, wobei die U-Basis 9 zwei benachbarte Kanäle 1a, 1b voneinander trennt und die U-Schenkel 10 von den abgewinkelten Stegen gebildet werden. Die einzelnen Trennbleche 5, 6 sind dabei jeweils aus Flachblechen gefertigt, welche unter Bildung der Stege bzw. U-Schenkel 10 abgekantet bzw. abgebogen werden. Dieses ergibt sich aus einer vergleichenden Betrachtung der einzelnen Darstellungen in den Fig. 5 bis 8.

Die U-Schenkel 10 eines Trennblechs 5, 6 werden dann flüssigkeitsdicht rückseitig mit der U-Basis 9 des benachbarten Blechs bzw. Trennblechs 5, 6 verbunden, nämlich verschweißt. Die Schweißnähte sind in den Figuren nicht dargestellt.

Aus Fig. 4 ergibt sich, dass drei Trennbleche 5 des ersten Blechtyps und drei Trennbleche 6 des zweiten Blechtyps miteinander verbunden werden. Zur Vervollständigung des Moduls werden beidseitig dieser Trennbleche Abschlussbleche 7, 8 verwendet. Das erste Abschlussblech 7 weist ebenfalls bereichsweise einen U-förmigen Querschnitt mit U-Basis 11 und U-Schenkeln 12 auf, wobei die U-Schenkel 12 dieses Abschlussblechs 7 mit der U-Basis 9 des benachbarten Trennblechs 5 verbunden, nämlich verschweißt sind. Das gegenüberliegende, zweite Abschlussblech 8 ist demgegenüber als Flachblech ohne Abkantungen bzw. Abwinklungen ausgebildet. Es ist mit den U-Schenkeln 10 des benachbarten Trennblechs 6 verbunden, nämlich verschweißt. Damit ergibt sich insbesondere aus der Fig. 4, wie die einzelnen Kanäle 1a, 1b durch Verbinden der Trennbleche 5, 6 sowie der Abschlussbleche 7, 8 hergestellt werden, ohne dass vollständige Kastenprofile verwendet werden müssen.

Die Ausgestaltung des Moduls M im Bereich der Kopfenden 4 und folglich im Bereich der Sammelkammern 2a, 2b, 3a, 3b ergibt sich dann aus einer vergleichenden Betrachtung der Fig. 1 und 3 sowie 5 bis 8.

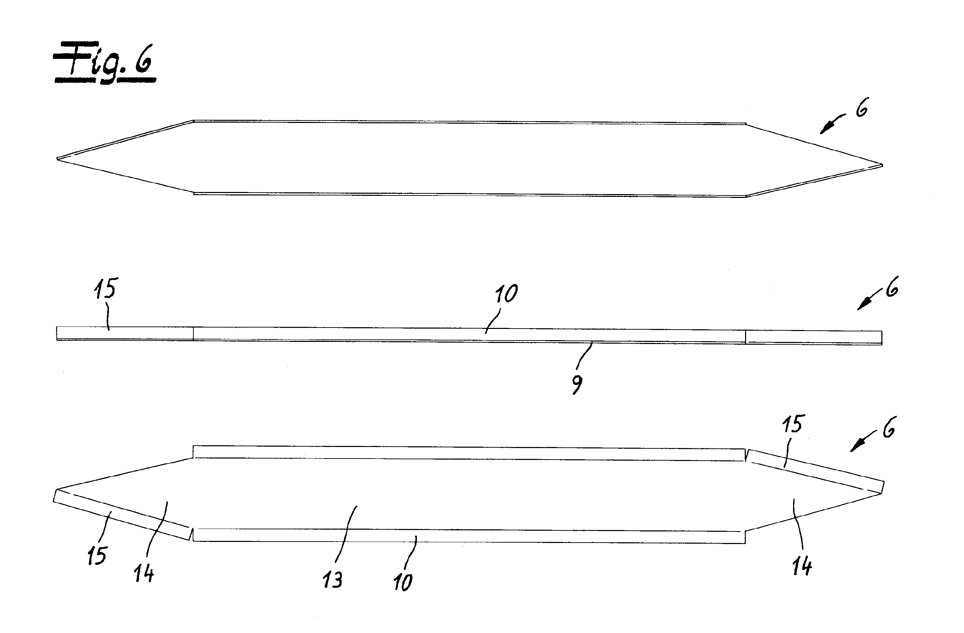

Die Fig. 5 und 6 zeigen zunächst einmal, dass die Trennbleche 5, 6 jeweils einen die Rohrstränge voneinander trennenden Mittelabschnitt 13 sowie zwei sich an den Mittelabschnitt 13 anschließende Endabschnitte 14 aufweisen, wobei diese Endabschnitte 14 die in die Sammelkammern mündenden Enden der Kanäle 1a, 1b bilden. Die Mittelabschnitte 13 sind rechteckförmig ausgebildet, das heißt, sie weisen eine über die gesamte Länge des Mittelabschnitts 13 konstante Höhe auf, wobei diese Höhe die Höhe des Kanals 1a, 1b und damit auch im Wesentlichen die Höhe des gesamten Moduls definiert. Die Endabschnitte 14 weisen demgegenüber eine sich zum Blechende hin verjüngende Höhe auf, sie sind im Ausführungsbeispiel spitz zulaufend und dreieckförmig ausgebildet. Dabei ist in den Fig. 5 und 6 erkennbar, dass diese Trennbleche 5, 6 nicht nur im Bereich der Mittelabschnitte abgewinkelte Stege 10 aufweisen, sondern dass auch im Bereich der Endabschnitte abgewinkelte Stege 15 vorgesehen sind. Während die Trennbleche 5, 6 im Bereich der Mittelabschnitte 13 folglich einen U-förmigen Querschnitt aufweisen, weisen diese Trennbleche 5, 6 im Bereich der Endabschnitte 14 einen L-förmigen Querschnitt auf. Dabei zeigt eine vergleichende Betrachtung der Fig. 5 und 6, dass die dort dargestellten Trennbleche 5, 6 im Bereich der Endabschnitte 14 unterschiedlich ausgebildet sind, indem nämlich die abgewinkelten Stege 15 im Bereich der Endabschnitte 14 "spiegelbildlich" angeordnet sind. Während das Trennblech 5 gemäß Fig. 5 links einen oberen Steg 15 und rechts einen unteren Steg 15 aufweist, weist das Trennblech 6 gemäß Fig. 6 links einen unteren Steg 15 und rechts einen oberen Steg 15 auf. Vergleicht man diese Darstellung mit der Darstellung in Fig. 4, so erkennt man, dass auf diese Weise gewährleistet ist, dass jeweils jeder zweite Kanal in eine Sammelkammer, z. B. in die untere Sammelkammer mündet, während die dazwischen liegenden Kanäle in die andere Sammelkammer, z. B. die obere Sammelkammer münden. Dieses gelingt bei sehr einfacher Fertigung, da lediglich geeignete Flachbleche geschnitten und anschließend abgekantet und miteinander verschweißt werden müssen. Um das Modul im Bereich des ersten Abschlussbleches 7 zu vervollständigen, sind noch zwei kleine Zusatzbleche als Zusatzstege vorgesehen, die in ihrer Größe und Dimension den Stegen 15 der Trennbleche entsprechen. Diese werden zwischen dem Abschlussblech 7 und dem benachbarten Trennblech 5 eingesetzt, um die Kanäle im Bereich der Kopfenden zu vervollständigen. Dieses ist in den Figuren nicht dargestellt.

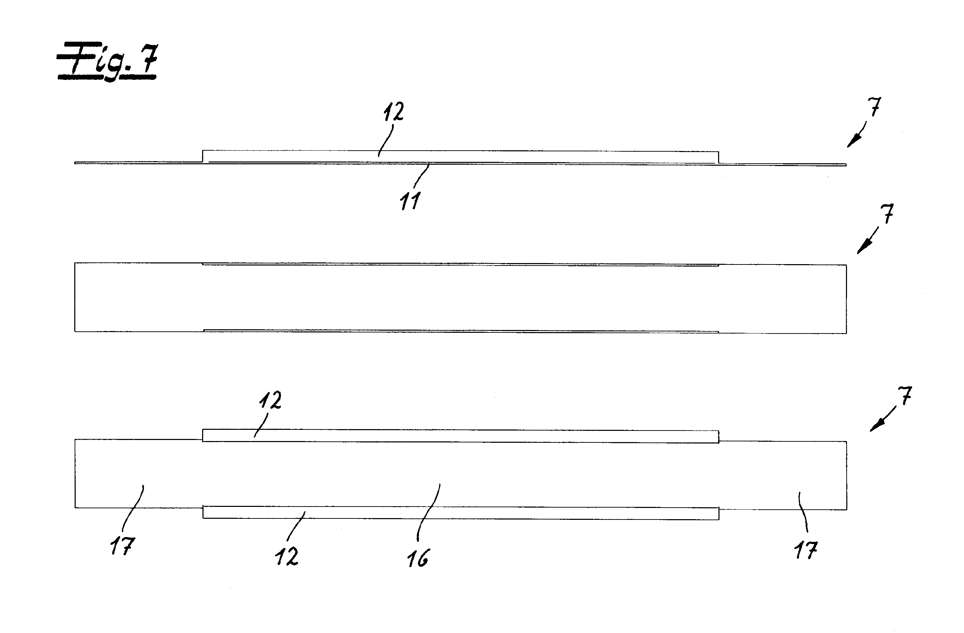

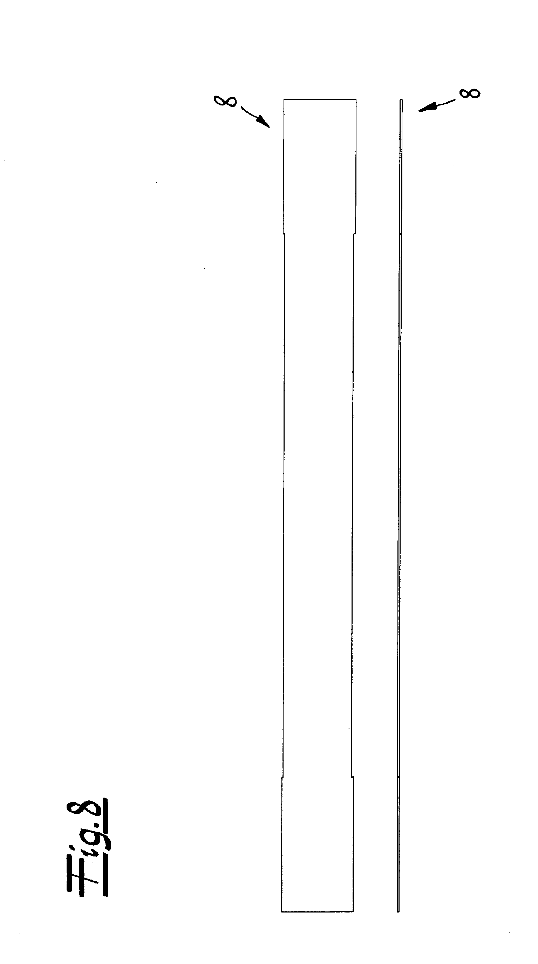

Im Übrigen ist in der Fig. 7 erkennbar, dass das Abschlussblech 7 ebenfalls einen Mittelabschnitt 16 aufweist, in dessen Bereich die abgewinkelten Stege 12 vorgesehen sind. An diesen Mittelabschnitt 16 schließen sich die Endabschnitte 17 an, die jedoch - im Gegensatz zu den Trennblechen - nicht spitz zulaufen, sondern ebenfalls eine konstante Höhe über die gesamte Länge aufweisen. Die Abschlussbleche 7, 8, die in den Fig. 7 und 8 dargestellt sind, bilden folglich die Seitenwände des Moduls.

Um das Modul weiter zu vervollständigen, sind im Bereich der Kopfenden 4 obere und untere Verschlussplatten 18 angeordnet, welche eine Länge aufweisen, die der Länge der Endabschnitte 14 bis 17 der Bleche entspricht. Diese Abschlussplatten 18 weisen Öffnungen 19 auf, welche Zulauföffnungen bzw. Ablauföffnungen bilden. Über die Öffnungen 19 können folglich die Medien a, b der einen Sammelkammer zugeführt und über die gegenüberliegende Ablaufkammer abgeführt werden. Die Abschlussplatten 18 sind vorzugsweise mit den übrigen Blechen fest verbunden, nämlich verschweißt. Auch endseitig ist eine Abschlussplatte 20 aufgeschweißt, welche zwei Wartungsöffnungen 21 aufweist, so dass die Sammelkammern 2a, 2b, 3a, 3b zu Wartungszwecken und Reinigungszwecken zugänglich sind. Diese Wartungszugänge 21 werden stirnseitig mit nicht dargestellten Abschlussplatten verschlossen, wobei mit einer einzigen Abschlussplatte die beiden Wartungsöffnungen 21 verschlossen werden können, indem diese Abschlussplatte in etwa die Außenmaße der Abschlussplatte 20 aufweist.

Dabei besteht vorzugsweise die Möglichkeit, dass mehrere Module M aufeinandergesetzt werden, so dass die Öffnungen 19 übereinanderliegender Module miteinander fluchten. Anhand der Funktionsskizze gemäß Fig. 10 sind nun die Fließwege der Medien a und b erkennbar. Es wird auch deutlich, dass durch die erfindungsgemäße Ausgestaltung die Strömungswege, nämlich der Fluss der Medien von oben nach unten verbessert wird, da die Medien oberseitig in ein Modul eintreten und unterseitig aus einem Modul austreten. Die Gravitation führt hier zu einem optimierten Strömungsverhalten, nämlich zu einer verbesserten Führung der Medien innerhalb eines Moduls. Fig. 9 zeigt im Übrigen, dass mehrere solcher Stapel nebeneinander angeordnet sind, wobei dann die einzelnen Stapel über Verbindungsleitungen 22 miteinander verbunden sind.

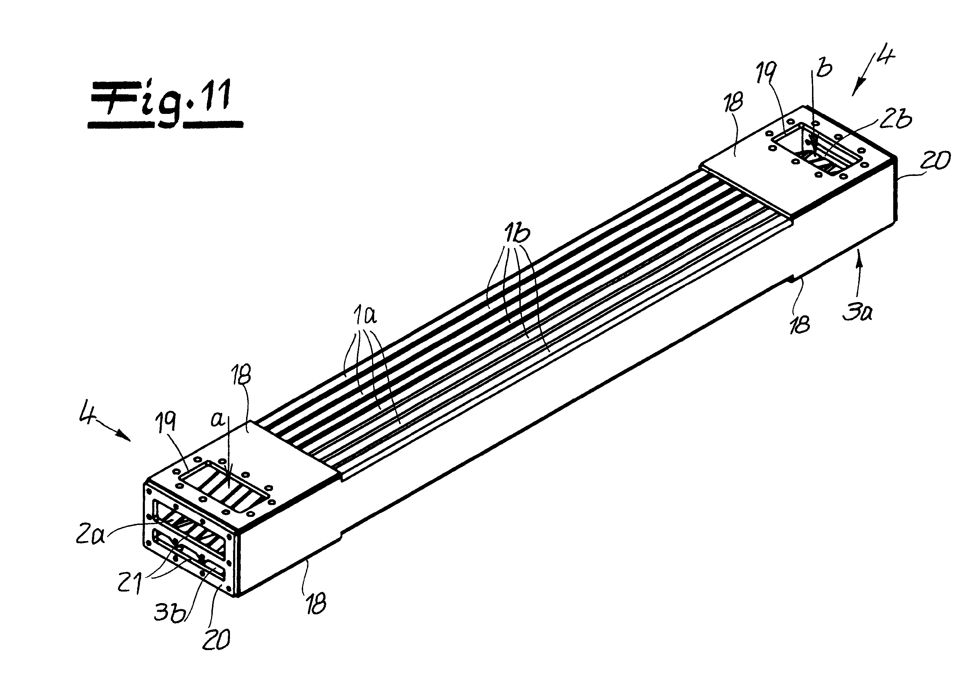

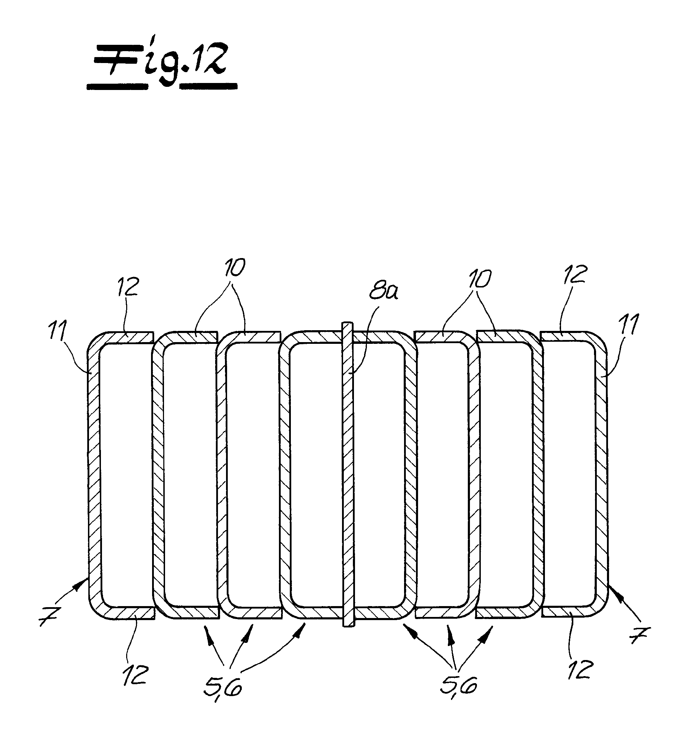

Die Fig. 11 und 12 zeigen eine abgewandelte Ausführungsform der Erfindung. Bei dieser Ausführungsform sind - im Gegensatz zu der Ausführungsform nach den Fig. 1 bis 10 - nicht sämtliche Trennbleche 5, 6 in derselben Richtung orientiert, sondern es ist ein zentrales Mittelblech 8a vorgesehen, wobei die beidseitig dieses Mittelblechs 8a angeordneten Trennbleche 5, 6 mit ihren U-Schenkeln in unterschiedlichen Richtungen orientiert sind. Es wird folglich gleichsam ein symmetrischer Aufbau realisiert, bei welchem sämtliche U-Schenkel der Trennbleche 5, 6 in Richtung auf das zentrale Mittelblech 8a hin orientiert sind. Im Übrigen sind außenseitig zwei Abschlussbleche 7, 7' vorgesehen, die ebenfalls bereichsweise einen U-förmigen Querschnitt mit U-Basis 11 und U-Schenkel 12 aufweisen, wobei die U-Schenkel 12 dieser Abschlussbleche 7, 7' mit der U-Basis des jeweils benachbarten Trennblechs 5, 6 verbunden, nämlich verschweißt sind. Die U-Stege 10 der Trennbleche 5, 6 sind auch bei dieser Ausführungsform flüssigkeitsdicht rückseitig mit der U-Basis eines benachbarten Bleches, z. B. Trennbleches 5, 6 verbunden, wobei die unmittelbar an das Mittelblech 8a grenzenden Trennbleche 5, 6 mit Ihren U-Stegen mit dem Mittelblech 8a verschweißt sind. Die Schweißverbindungen sind in den Figuren nicht dargestellt. Während bei der Ausführungsform nach den Fig. 1 bis 10 folglich eine ungerade Anzahl von Kanälen (z. B. sieben Kanäle) realisiert sind, ist bei der Ausführungsform nach den Fig. 11 und 12 eine gerade Anzahl an Kanälen, nämlich acht Kanäle vorgesehen. Im Übrigen entspricht der Aufbau der Ausführungsform nach den Fig. 11 und 12 dem Aufbau der Ausführungsform nach den Fig. 1 bis 10. Es sind ebenfalls die erfindungswesentlichen Sammelkammern vorgesehen, die in vergleichbarer Weise konstruiert sind wie bei der Ausführungsform nach den Fig. 1 bis 10. Die Öffnungen 19 für Zulauf und Ablauf sind bei der Ausführungsform nach den Fig. 11 und 12 nicht rund, sondern rechteckig ausgebildet. Auch bei dieser Ausführungsform besteht selbstverständlich die Möglichkeit, eine Mehrzahl von Modulen in der beschriebenen Weise hintereinander zu schalten.

Von besonderer Bedeutung ist im Übrigen die Tatsache, dass sich insgesamt druckfeste Wärmetauschermodule realisieren lassen, die auch den üblichen Druckgeräterichtlinien genügen. Insbesondere lassen sich Wärmetauschermodule realisieren, welche bis zu einem Druck von 5 bar druckfest sind.

## Patentansprüche

1. Wärmetauscher zur Wärmeübertragung von einem ersten fließfähigen Medium (a), z. B. (aufgeheiztem) Faulschlamm oder Wasser, an ein zweites fließfähiges Medium (b), z. B. (kaltem) Rohschlamm,
mit zumindest einem Wärmetauschermodul (M), welches ein erstes Rohrleitungsbündel mit mehreren Rohrsträngen (1a) für das erste Medium (a) und ein zweites Rohrleitungsbündel mit mehreren Rohrsträngen (1 b) für das zweite Medium (b) aufweist,
wobei die Rohrstränge (1a) des ersten Rohrleitungsbündels an einem Kopfende (4) in eine gemeinsame erste Zulauf-Sammelkammer (2a) und an ihrem gegenüberliegenden Kopfende (4) in eine gemeinsame erste Ablauf-Sammelkammer (3a) münden und
wobei die Rohrstränge (1 b) des zweiten Rohrleitungsbündels an einem Kopfende (4) in eine zweite Zulauf-Sammelkammer (2b) oder Ablauf-Sammelkammer und an ihrem gegenüberliegenden Kopfende in eine zweite Ablauf-Sammelkammer (3b) oder Zulauf-Sammelkammer münden,
wobei an jedem Kopfende des Wärmetauschermoduls (M) jeweils eine Sammelkammer für das erste Medium (a) und eine Sammelkammer für das zweite Medium (b) angeordnet sind,
**dadurch gekennzeichnet,**
**dass** die Rohrstränge (1a, 1 b) von mehreren sich in Modullängsrichtung erstreckenden Blechen (5, 6, 7, 8) gebildet werden, von denen zumindest einige entlang ihrer Längskanten abgewinkelte Stege (10, 12) aufweisen, wobei die Stege (10, 12) eines Blechs mit dem jeweils benachbarten Blech unter Bildung des jeweiligen Rohrstrangs verbunden sind.

2. Wärmetauscher nach Anspruch 1, **dadurch gekennzeichnet, dass** zumindest einige der Bleche (5, 6, 7, 8) als Trennbleche (5, 6) zwischen zwei benachbarten Kanälen ausgebildet sind, wobei diese Trennbleche (5, 6) zumindest bereichsweise einen U-förmigen Querschnitt aufweisen, wobei die U-Basis (9) zwei benachbarte Rohrstränge voneinander trennt und die U-Schenkel (10) die abgewinkelten Stege (10) bilden.

3. Wärmetauscher nach Anspruch 2, **dadurch gekennzeichnet, dass** die Trennbleche (5, 6) jeweils einstückig aus Flachblechen gefertigt sind, welche unter Bildung der Stege (10) abgebogen oder abgekantet sind.

4. Wärmetauscher nach Anspruch 2 oder 3, **dadurch gekennzeichnet, dass** U-Stege (10) eines Trennblechs (5, 6) flüssigkeitsdicht rückseitig mit der U-Basis (9) eines benachbarten Blechs (5, 6, 7, 8), z. B. eines benachbarten Trennblechs (5, 6) oder mit einem benachbarten Flachblech (8a) verbunden, z. B. verschweißt sind.

5. Wärmetauscher nach einem der Ansprüche 2 bis 4, **dadurch gekennzeichnet, dass** das Wärmetauschermodul (M) aus verschiedenen Trennblechen (5, 6) unterschiedlichen Typs zusammengesetzt ist, z. B. abwechselnd nebeneinander aus Trennblechen (5) eines ersten Blechtyps und Trennblechen (6) eines zweiten Blechtyps.

6. Wärmetauscher nach einem der Ansprüche 1 bis 5, **dadurch gekennzeichnet, dass** zumindest einige Bleche (5, 6, 7, 8) als Abschlussbleche (7, 8) ausgebildet sind, wobei das Wärmetauschermodul zwei das Modul seitlich begrenzende Abschlussbleche (7, 8) aufweist, welche jeweils mit einem benachbarten Trennblech (5, 6) einen Rohrstrang bilden.

7. Wärmetauscher nach Anspruch 6, **dadurch gekennzeichnet, dass** zumindest ein Abschlussblech (7, 7') zumindest bereichsweise einen U-förmigen Querschnitt mit U-Basis (11) und U-Schenkeln (12) aufweist, wobei die U-Schenkel (12) dieses Abschlussblechs (7) mit der U-Basis (9) eines benachbarten Trennblechs (5, 6) verbunden, vorzugsweise verschweißt sind.

8. Wärmetauscher nach Anspruch 6 oder 7, **dadurch gekennzeichnet, dass** zumindest ein Abschlussblech (8) als Flachblech ohne Abkantungen oder Abwinklungen ausgebildet ist.

9. Wärmetauscher nach Anspruch 6 oder 7, **dadurch gekennzeichnet, dass** zwischen mehreren Trennblechen (5, 6) ein zentrales Mittelblech (8a) angeordnet ist, welches als Flachblech (8a) ausgebildet ist, wobei die auf den beiden Seiten des Mittelblechs (8a) angeordneten Trennbleche (5, 6) derart in unterschiedlichen Richtungen orientiert sind, dass die dem Mittelblech unmittelbar benachbarten Trennbleche (5, 6) jeweils mit ihren U-Schenkeln mit dem Mittelblech (8a) verbunden, z. B. verschweißt sind.

10. Wärmetauscher nach einem der Ansprüche 2 bis 9, **dadurch gekennzeichnet, dass** die Trennbleche (5, 6) einen die Rohrstränge voneinander trennenden Mittelabschnitt (13) und endseitig an diesen Mittelabschnitt (13) angeschlossene und die Mündung in die jeweilige Sammelkammer bildende Endabschnitte (14) aufweisen.

11. Wärmetauscher nach Anspruch 10, **dadurch gekennzeichnet, dass** die Mittelabschnitte (13) eine die Höhe des Rohrstrangs definierende und über die gesamte Länge des Mittelabschnitts konstante Höhe aufweisen.

12. Wärmetauscher nach Anspruch 10 oder 11, **dadurch gekennzeichnet, dass** die Endabschnitte (14) eine sich zum Blechende hin verjüngende Höhe aufweisen und vorzugsweise dreieckförmig ausgebildet sind.

13. Wärmetauscher nach einem der Ansprüche 10 bis 12, **dadurch gekennzeichnet, dass** die Trennbleche (5, 6) an jedem Endabschnitt (14) jeweils zumindest einen, vorzugsweise lediglich einen abgewinkelten Steg (15) aufweisen, welcher mit dem Endabschnitt (14) eines benachbarten Blechs, z. B. Trennblechs (5, 6) verbunden, z. B. verschweißt ist.
